(19)

Europäisches
Patentamt
European
Patent Office
Office européen
des brevets

(11)  EP 2 133 945 A1

(12)  EUROPEAN PATENT APPLICATION
published in accordance with Art. 153(4) EPC

(43) Date of publication:
16.12.2009 Bulletin 2009/51

(51) Int Cl.:
H01M 4/90 (2006.01)       B01J 23/32 (2006.01)
H01M 8/10 (2006.01)       H01M 8/12 (2006.01)

(21) Application number: 08739035.7

(22) Date of filing: 27.03.2008

(86) International application number:
PCT/JP2008/055906

(87) International publication number:
WO 2008/123365 (16.10.2008 Gazette 2008/42)

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: 28.03.2007 JP 2007083909

(71) Applicant: Sumitomo Chemical Company, Limited
Tokyo 104-8260 (JP)

(72) Inventors:
• HIBINO, Takashi
Seto-shi
Aichi
4890918 (JP)

• NAGAO, Masahiro
Nagoya-shi
Aichi
4640815 (JP)
• NAMEKATA, Yousuke
Minamiuonuma-shi
Niigata 949-7302 (JP)
• IWASAKI, Katsuhiko
Tsukuba-shi
Ibaraki 305-0003 (JP)
• TANAKA, Toshihiko
Inashiki-gun
Ibaraki 300-0331 (JP)

(74) Representative: Hart-Davis, Jason et al
Cabinet Beau de Loménie,
158, rue de l'Université
75340 Paris Cedex 07 (FR)

(54) ELECTRODE CATALYST COMPOSITION, ELECTRODE, AND FUEL CELL AND MEMBRANE-ELECTRODE ASSEMBLY EACH COMPRISING THE ELECTRODE

(57)    Provided are an electrode to enhance the power generation efficiency in a fuel cell, in particular a single-chamber solid electrolyte fuel cell, and such an electrode. The electrode of the present invention comprises ΔEh, represented by the following formula (1), being not less than -10 mV and not more than 100 mV.

$$\Delta Eh = E_0 - E_3 \quad (1)$$

(where $E_0$ denotes an electrode potential when a gas having a hydrogen concentration of 0% (an oxidizing gas only) makes contact with the electrode at room temperature, and $E_3$ denotes an electrode potential when a mixed gas having a hydrogen concentration of 3 volume% (a hydrogen gas and the oxidizing gas) makes contact with the electrode at room temperature.)

*Fig.3*

EP 2 133 945 A1

## Description

### Technical Field

The present invention relates to an electrode catalyst composition, an electrode, and a fuel cell and a membrane-electrode assembly comprising the electrode.

### Background Art

Electrode catalyst compositions are used as electrodes for fuel cells. Fuel cells have been attracting attention in recent years as energy conversion devices that has high energy conversion efficiency and also emit clean gasses. Solid electrolyte fuel cells are the representative fuel cells, and such a fuel cell can include two-chamber solid electrolyte fuel cells and single-chamber solid electrolyte fuel cells.

Two-chamber solid electrolyte fuel cells usually have a configuration in which a solid electrolyte (in the form of a membrane or a plate) is used as a partition wall, a fuel gas (hydrogen, alcohol, hydrocarbon, or the like) makes contact with an electrode (anode) disposed on one side of the partition wall, and an oxidizing gas (oxygen, air, or the like) makes contact with an electrode (cathode) disposed on the other side (for example, refer to Patent Document 1), and such a configuration makes it possible to obtain a potential difference between both electrodes.

Single-chamber solid electrolyte fuel cells have a configuration in which two electrodes are disposed on a solid electrolyte (in the form of a membrane or a plate), a fuel gas and an oxidizing gas are not partitioned, and a mixed gas of a fuel gas and an oxidizing gas makes contact with the two electrodes (for example, refer to Patent Document 2, Non-Patent Documents 1 and 2). Since such a configuration is simpler than the configuration of the two-chamber solid electrolyte fuel cells described above, it has an advantage in view of costs. In such a single-chamber solid electrolyte fuel cell, each of the two electrodes, i.e. a cathode and an anode, are required to have reaction selectivity during the contact of the mixed gas. That is, the anode and the cathode are required to preferentially proceed with an oxidation reaction and a reduction reaction, respectively, and as a result, a potential difference comes to be generated between both electrodes.

[Patent Document 1] JP 10-294117 A
[Patent Document 2] JP 2002-280015 A
[Non-Patent Document 1] Priestnall, Kozdeba, Fish, Nilson, Journal of Power Source, vol. 106 (2002), pages 21-30
[Non-Patent Document 2] Dyer, Nature, vol. 343 (1990), pages 547 - 548

## Disclosure of the Invention

### Problem to be solved by the Invention

However, there have been cases that the single-chamber solid electrolyte fuel cells described above is not sufficient in the power generation efficiency.

An object of the present invention is therefore to provide an electrode to enhance the power generation efficiency in a fuel cell, in particular a single-chamber solid electrolyte fuel cell, and an electrode catalyst composition capable of forming such an electrode. In addition, an object of the present invention is to provide a fuel cell and a membrane-electrode assembly each comprising the electrodes of the present invention.

### Means for solving the Problem

As a result of keen examinations, the present inventors have come to complete the present invention. That is, the present invention provides the inventions below.

(1) An electrode, comprising $\Delta Eh$, represented by the following formula (1), being not less than -10 mV and not more than 100 mV,

$$\Delta Eh = E_0 - E_3 \quad (1)$$

(where $E_0$ denotes an electrode potential when a gas having a hydrogen concentration of 0% (an oxidizing gas only) makes contact with the electrode at room temperature, and $E_3$ denotes an electrode potential when a mixed gas having a hydrogen concentration of 3 volume% (a hydrogen gas and the oxidizing gas) makes contact with the electrode at room temperature.)

(2) An electrode catalyst composition, comprising a trivalent manganese-containing compound.

(3) The electrode catalyst composition of (2), wherein the trivalent manganese-containing compound is supported by a conductive material.

(4) The electrode catalyst composition of (2) or (3), wherein the trivalent manganese-containing compound is $Mn_2O_3$.

(5) The electrode catalyst composition of any of (2) to (4), wherein the conductive material is a carbon material.

(6) An electrode, comprising the electrode catalyst composition of any of (2) to (5).

(7) A fuel cell, comprising the electrode of (1) or (6).

(8) A solid electrolyte fuel cell, comprising the electrode of (1) or (6).

(9) A single-chamber solid electrolyte fuel cell, comprising the electrode of (1) or (6).

(10) A single-chamber solid electrolyte fuel cell, comprising a cathode and an anode, both made of the electrode of (1) or (6).
(11) The single-chamber solid electrolyte fuel cell of (10), whrein the anode is an electrode including gold and platinum.
(12) The single-chamber solid electrolyte fuel cell of (11), whrein, in the electrode including gold and platinum, the number of gold atoms is exceeding 0 and not more than 3 when the number of platinum atoms is 100.
(13) The single-chamber solid electrolyte fuel cell of (11) or (12), wherein, in the electrode including gold and platinum, the platinum is modified with the gold.
(14) A membrane-electrode assembly, comprising: a solid electrolyte membrane; and the electrode of (1) or (6) being attached to the solid electrolyte membrane.

## Effect of the Invention

According to the present invention, it is possible to provide an electrode suitable for enhancing the electromotive force in a fuel cell, in particular a single-chamber solid electrolyte fuel cell, and the present invention is industrially extremely useful. Moreover, according to the present invention, it is possible to provide an electrode catalyst composition capable of forming the electrodes of the present invention described above, and a fuel cell and a membrane-electrode assembly, each comprising the electrodes of the present invention and having high power generation efficiency.

## Brief Description of Drawings

Fig. 1 is a schematic view showing a cross-sectional configuration of a two-chamber solid electrolyte fuel cell.
Fig. 2 is a schematic view showing a cross-sectional configuration of a single-chamber solid electrolyte fuel cell.
Fig. 3 is a graph showing relationship of $\Delta E$ relative to a hydrogen concentration in the case of using a cathode of each Test Example.
Fig. 4 is a graph showing relationship, in an anode of each sample, of an oxygen consumption rate (%) obtained by the sample relative to the number of gold atoms per 100 platinum atoms.
Fig. 5 is a schematic view showing a configuration of a fuel cell in the case of stacking three layers of a membrane-electrode assembly 4.
Fig. 6 is a diagram showing a laminated condition of the membrane-electrode assembly 4 in Fig. 5.
Fig. 7 is a graph showing power generation characteristics (current-voltage characteristics) obtained in each case of laminating one to four layers of the membrane-electrode assembly 4.

## Description of the Reference Symbols

1: anode, 2: solid electrolyte, 3: cathode, 4: membrane-electrode assembly, 5: conductive wire, and 6: carbon paper.

## Best Modes for Carrying Out the Invention

Preferred embodiments of the present invention will be described in detail below.
First, an electrode regarding a preferred embodiment of the present invention is an electrode having $\Delta Eh$, represented by the following formula (1), being not less than -10 mV and not more than 100 mV,

$$\Delta Eh = E_0 - E_3 \quad (1)$$

(where $E_0$ denotes an electrode potential when a gas having a hydrogen concentration of 0% (an oxidizing gas only) makes contact with the electrode at room temperature, and $E_3$ denotes an electrode potential when a mixed gas having a hydrogen concentration of 3 volume% (a hydrogen gas and the oxidizing gas (the oxidizing gas same as the case of measuring $E_0$)) makes contact with the electrode at room temperature.)
In this context, the room temperature can be set at, for example, 23°C. The electrode potential can be measured by appropriately selecting from known methods. For example, the methods include a method of measuring the electrode potential with an electrometer in which a standard electrode is used as a counter electrode and the impedance is sufficiently high. In the present embodiment, when the oxidizing gas is air, the $\Delta Eh$ tends to be not less than 0 mV and not more than 100 mV In addition, the $\Delta Eh$ is preferably not less than 0 mV and not more than 84 mV, more preferably not less than 0 mV and not more than 76 mV, even more preferably not less than 0 mV and not more than 55 mV, and particularly preferably not less than 0 mV and not more than 8 mV.
The electrode satisfying the $\Delta Eh$ described above includes an electrode containing a catalyst and a conductive material. Specific examples of such a catalyst can include $Mn_2O_3$, $ZrO_2$, $SnO_2$, and $In_2O_3$. Above all, $Mn_2O_3$ and $ZrO_2$ are preferred, and $Mn_2O_3$ is particularly preferred. On the other hand, the conductive material may be appropriately selected from known materials for use. For example, it can include carbon materials (graphite, acetylene black, carbon nanotube, fullerene, and the like) and metal materials (platinum and the like). Above all, carbon materials are preferred in view of costs.
The mixing method of the catalyst and the conductive material may be in accordance with known techniques. For example, the method includes a method of mixing a powder of such a catalyst and a conductive material, a method of mixing a catalyst precursor and a conductive material and then converting the precursor into a catalyst, and the like. Here, in the case where the catalyst is $Mn_2O_3$, for example, manganese nitrate hexahydrate, which is a precursor, and a conductive material are mixed, and then the manganese nitrate hexahydrate can be converted into $Mn_2O_3$ by heat treatment. It should be noted that the amount of the catalyst relative to (the catalyst + the conductive material) is not particularly limited, and it is preferably from 5 to 90 weight%, more preferably from 10 to 80 weight%, and even more preferably from 20 to 70 weight%.

Moreover, an electrode catalyst composition as a preferred embodiment of the present invention has a trivalent manganese-containing compound. The electrode catalyst composition of the present embodiment is particularly preferred as a material to construct the electrode described above. Such a trivalent manganese-containing compound can include $Mn_2O_3$. In the present embodiment, such a trivalent manganese-containing compound is preferably supported by a conductive material.

The conductive material may be appropriately selected from known materials for use. For example, it may include carbon materials (graphite, acetylene black, carbon nanotube, fullerene, and the like) and metal materials (platinum and the like). Above all, carbon materials are preferred in view of costs. Electrodes including such an electrode catalyst composition are useful for fuel cells.

The electrode of the embodiment described above and the electrode made of the electrode catalyst composition of the embodiment described above are useful for fuel cells, and above all useful for solid electrolyte fuel cells, particularly for single-chamber solid electrolyte fuel cells. When using such an electrode as an electrode for single-chamber solid electrolyte fuel cells, the use as a cathode is particularly preferred.

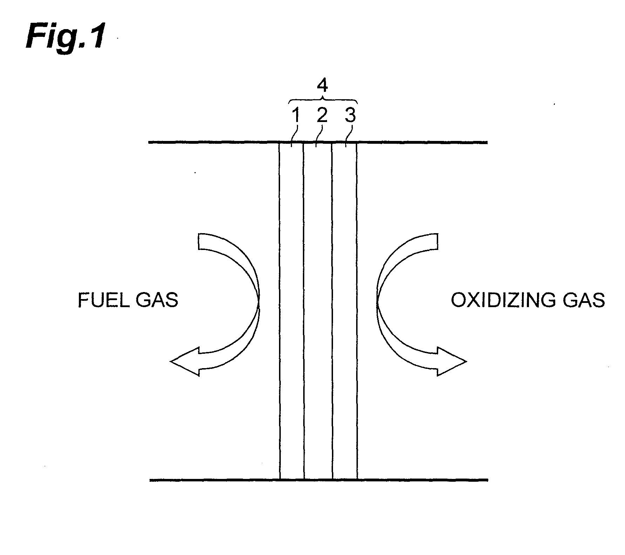

Fig. 1 is a schematic view showing a cross-sectional configuration of a two-chamber solid electrolyte fuel cell. The two-chamber solid electrolyte fuel cell shown in Fig. 1 has a solid electrolyte 2 inside a predetermined chamber as a partition wall, and an anode 1 is disposed on one side of this solid electrolyte 2 and a cathode 3 on the other side to form a membrane-electrode assembly 4. In this two-chamber solid electrolyte fuel cell, a fuel gas and an oxidizing gas are fed to the cathode 1 side and the anode 3 side, respectively.

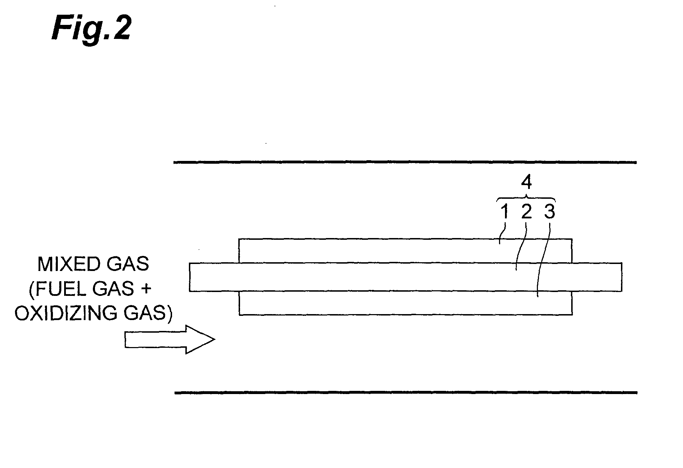

In contrast, Fig. 2 is a schematic view showing a cross-sectional configuration of a single-chamber solid electrolyte fuel cell. The single-chamber solid electrolyte fuel cell shown in Fig. 2, different from the two-chamber solid electrolyte fuel cell described above, has a solid electrolyte 2 disposed so as not to partition the inside of a predetermined chamber, and an anode 1 and a cathode 3 are disposed on one side of this solid electrolyte 2 and on the other side, respectively, to form a membrane-electrode assembly 4. In this single-chamber solid electrolyte fuel cell, a mixed gas of a fuel gas and an oxidizing gas is introduced inside the chamber.

In fuel cells having the configuration described above, major components are an anode 1, a cathode 3, an electrolyte 2, a fuel gas (hydrogen, methanol, methane, or the like), and an oxidizing gas (oxygen, air, or the like). When such a fuel cell is a single-chamber solid electrolyte fuel cell, a mixed gas of a fuel gas and an oxidizing gas is used instead of the fuel gas and the oxidizing gas. It should be noted that the configuration of such a fuel cell is not particularly limited, and may be in accordance with known techniques. Moreover, in fuel cells, each of the fuel gas, the oxidizing gas, and the mixed gas may also be humidified.

The combination of the fuel gas/oxidizing gas can include hydrogen/oxygen, hydrogen/air, methanol/oxygen, methanol/air, and the like. Above all, hydrogen/oxygen and hydrogen/air are preferred from the perspective of more enhancing the electromotive force.

Solid electrolytes are the representative electrolyte, and the materials may be selected in accordance with known techniques. More specific examples of such a solid electrolyte material can include inorganic materials such as stabilized zirconia and metal phosphate, organic materials such as polymers (fluorine-based, hydrocarbon-based), materials in which phosphoric acid is immobilized on a solid substrate (for example, phosphoric acid + a porous body, phosphoric acid + a polymer), and the like. From the perspectives of the operating temperature and long-term stability of fuel cells, metal phosphate is preferred. In addition, such a solid electrolyte is often in the form of a membrane or a plate. Like the configuration of the fuel cell described above, a membrane-electrode assembly of a preferred embodiment is one in which an electrode of the preferred embodiment described above is attached to such a solid electrolyte membrane.

As the anode in such a fuel cell, a known material such as platinum may be used. For example, in single-chamber solid electrolyte fuel cells, the anode is preferably an electrode including gold and platinum. In such an electrode including gold and platinum, the platinum is more preferably modified with the gold at least partially. The use of such an anode more enhances the power generation efficiency of single-chamber solid electrolyte fuel cells. It should be noted that such an anode can also be used for fuel cells other than single-chamber solid electrolyte fuel cells.

In such an electrode including gold and platinum which is preferred as an anode, the number of gold atoms, when the number of platinum atoms is 100, is preferably exceeding 0 and not more than 3, more preferably exceeding 0 and not more than 2, even more preferably exceeding 0 and not more than 1, particularly preferably not less than 0.15 and not more than 0.25, and even further preferably not less than 0.20 and not more than 0.25. It should be noted that "exceeding 0" means the case where the number of gold atoms is not 0 at least, but the gold atoms are included even slightly, and the number of gold atoms is preferably not less than 0.001 from the perspective of obtaining the effect of the present invention better.

The anode may further include a conductive material. The conductive material may be selected from known materials for use, if required. For example, it can include carbon materials (graphite, acetylene black, carbon nanotube, fullerene, and the like) and metal materials (platinum and the like). The mixing of the materials constructing such an anode may be in accordance with known techniques.

In addition, the anode may also include an electrolyte. The electrolyte is appropriately selected from known materials. For example, the electrolyte may include a fluorine-based polymer electrolyte, a hydrocarbon-based polymer electrolyte, phosphoric acid, monoester phosphate, diester phosphate, sulfuric acid, methanesulfonic acid, trifluoromethanesulfonic acid, and the like.

Further, the anode may also include nonelectrolyte polymers. Such a polymer is appropriately selected from known materials, and fluororesins such as Teflon (registered trademark) and polyvinylidene fluoride, are preferably used.

**Examples**

The present invention will be described in further detail by way of Examples below, but the present invention is not limited to these Examples.

[Test Example 1]

<Fabrication of Cathode Catalyst Composition and Cathode ($Mn_2O_3$)>

[In a solvent obtained by mixing ethanol (50 ml) and distilled water (50 ml), particulate carbon (black pearl) powder (0.4 g) was mixed and stirred, and further manganese nitrate hexahydrate (3.13 g) was mixed. The obtained mixture was evaporated to dryness at 230°C, the resulting powder was pulverized, and thus a cathode catalyst composition was yielded. To 60 mg of this pulverized powder, several drops of a 5% polyvinylidene fluoride solution that was dissolved in N-methylpyrrolidone were added, and the slurry obtained by mixing them was applied on carbon paper (1 cm x 2 cm) and was dried for one hour at 90°C and subsequently for one hour at 130°C to fabricate a cathode. On the carbon paper, a cathode of 15 to 17 $mg/cm^2$ having a thickness of approximately 150 to 200 $\mu$m was formed.

[Test Example 2]

< Fabrication of Cathode Catalyst Composition and Cathode ($ZrO_2$)>

$ZrO_2$ powder and particulate carbon (black pearl) powder were mixed in a mortar, and to 30 mg of the resulting mixture (a cathode catalyst composition), PTFE (30 mg) and glycerin (0.3 ml) were further mixed to yield a slurry. This slurry was applied on carbon paper (1 cm x 2 cm), and was subjected to heat treatment in which the slurry was maintained for three to four hours at 150°C under argon atmosphere, and further was maintained for one hour at 350°C under the same atmosphere to fabricate a cathode. On the carbon paper, a cathode of 20 $mg/cm^2$ was formed.

[Test Example 3]

<Fabrication of Cathode Catalyst Composition and Cathode ($SnO_2$)>

In the same manner as Test Example 2 other than using $SnO_2$ powder instead of the $ZrO_2$ powder, a cathode was fabricated.

[Test Example 4]

<Fabrication of Cathode Catalyst Composition and Cathode ($In_2O_3$)>

In the same manner as Test Example 2 other than using $In_2O_3$ powder instead of the $ZrO_2$ powder, a cathode was fabricated.

[Test Example 5]

<Fabrication of Cathode Catalyst Composition and Cathode (NiO)>

In the same manner as Test Example 2 other than using NiO powder instead of the $ZrO_2$ powder, a cathode was fabricated.

[Test Example 6]

<Fabrication of Cathode Catalyst Composition and Cathode ($WO_3$)>

In the same manner as Test Example 2 other than using $WO_3$ powder instead of the $ZrO_2$ powder, a cathode was fabricated.

[Test Example 7]

<Fabrication of Cathode Catalyst Composition and Cathode ($MnO_2$)>

In the same manner as Test Example 2 other than using $MnO_2$ powder instead of the $ZrO_2$ powder, a cathode was fabricated.

[Test Example 8]

<Fabrication of Solid Electrolyte (Pellets of Tin Phosphate)>

As a solid electrolyte, round pellets of $Sn_{0.9}In_{0.1}P_2O_7$ (a diameter of 12 mm, a thickness of 1 mm) were used. In addition, these pellets were produced using the same method as that described in Electrochemical and Solid State Letters, vol. 9, third issue, A105 - A109 pgs. (2006).

[Test Example 9]

<Fabrication of Anode Catalyst Composition and Anode (Platinum)>

To 60 mg of platinum-supported carbon (produced by Tanaka Kikinzoku, a platinum amount of 28.4 weight %), several drops of a 5% polyvinylidene fluoride solution that was dissolved in N-methylpyrrolidone were added, the slurry obtained by mixing them was applied on carbon paper, and was dried for one hour at 90°C and subsequently for one hour at 130°C to yield an anode.

[Test Example 10]

<Fabrication of Anode Catalyst Composition and Anode (Platinum + 0.15 mol% of Gold)>

Platinum-supporting carbon (produced by Tanaka Kikinzoku, a platinum amount of 28.4 weight %), $HAuCl_4$ tetrahydrate, $NaBH_4$, and ion exchange water were used. That is, first, into a dispersion in which 150 mg of a platinum-supporting carbon was dispersed in water, 0.0001 mol/L of an aqueous $HAuCl_4$ tetrahydrate solution (3.3 ml) and 0.002 mol/L of an aqueous $NaBH_4$ solution (30 ml) were dropped to obtain a mixture adjusted in such a way that the number of gold atoms became 0.15 relative to 100 platinum atoms. After filtering this mixture, the mixture was heated in a 10 volume% hydrogen / 90 volume% argon gas for one hour at 200°C to yield an anode catalyst composition.
To the resulting anode catalyst composition (60 mg), several drops of a 5% polyvinylidene fluoride solution that was dissolved in N-methylpyrrolidone were added, the slurry obtained by mixing them was applied on carbon paper, and was dried for one hour at 90°C and subsequently for one hour at 130°C to yield an anode. On the carbon paper, an anode of 15 to 17 mg/cm$^2$ having a thickness of approximately 150 to 200 $\mu$m was formed.

[Test Example 11]

<Fabrication of Anode Catalyst Composition and Anode (Platinum + 0.10 mol% of gold)>

In the same manner as Test Example 10 other than changing the number of gold atoms into 0.10 relative to 100 platinum atoms, an anode was obtained.

[Test Example 12]

<Fabrication of Anode Catalyst Composition and Anode (Platinum + 0.20 mol% of gold)>

In the same manner as Test Example 10 other than changing the number of gold atoms into 0.20 relative to 100 platinum atoms, an anode was obtained.

[Test Example 13]

<Fabrication of Anode Catalyst Composition and Anode (Platinum + 0.25 mol% of gold)>

In the same manner as Test Example 10 other than changing the number of gold atoms into 0.25 relative to 100 platinum atoms, an anode was obtained.

[Test Example 14]

<Fabrication of Anode Catalyst Composition and Anode (Platinum + 0.50 mol% of gold)>

In the same manner as Test Example 10 other than changing the number of gold atoms into 0.50 relative to 100 platinum atoms, an anode was obtained.

[Test Example 15]

<Measurement of $\Delta Eh$ >

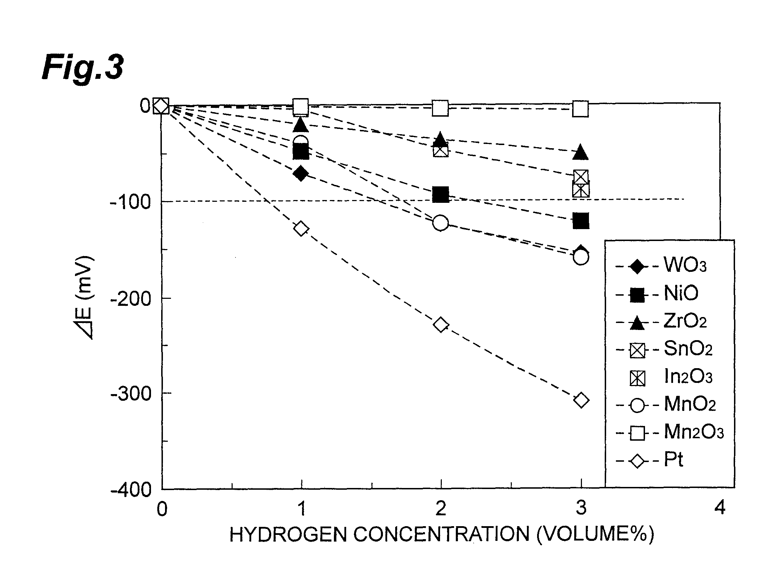

To one side of the pellets of the solid electrolyte in Test Example 8, the cathode side of the carbon paper having a cathode according to any of Test Examples 1 to 7 was pressure-bonded, and in addition, the anode side of the carbon paper having an anode according to Test Example 9 was pressure-bonded to the other side of these pellets, and thereby a variety of membrane-electrode assemblies having each cathode of Test Examples 1 to 7 were fabricated.
Then, at room temperature (23°C), a mixed gas (hydrogen varied among 0, 1,2, and 3 volume%) of hydrogen and air made contact with the cathode side of these membrane-electrode assemblies, and also air made contact with the anode side of these membrane-electrode assemblies. In this procedure, the air to make contact with the anode side was kept from being mixed with the mixed gas to make contact with the cathode side.
In this way, the potential difference generated between the cathode-anode was detected by an electrometer (manufactured by Hokuto Denko Corporation, Model Type "HE-104") and determined as the electrode potential ($\Delta E$ (mV)) of the cathode. It should be noted that the $\Delta E$ obtained in the case of 3 volume% of hydrogen is $E_3$, and the $\Delta E$ obtained in the case of 0 volume% of hydrogen is $E_0$.
The results of the obtained $\Delta E$ are shown in Fig. 3. Fig. 3 is a graph showing relationship of $\Delta E$ relative to

a hydrogen concentration in the case of using the cathode of each Test Example. According to Fig. 3, ΔEh ($E_3 - E_0$) was 8 mV in the case of $Mn_2O_3$ (the cathode of Test Example 1), 55 mV in the case of $ZrO_2$ (the cathode of Test Example 2), 76 mV in the case of $SnO_2$ (the cathode of Test Example 3), and 84 mV in the case of $In_2O_3$ (the cathode of Test Example 4). From these results, it was understood that the cathodes of Test Examples 1 to 4 had small potential variations due to variation in the hydrogen concentration.

[Test Example 16]

<Measurement of Side Reaction in Anode>

The anode side of the carbon paper having an anode according to each of Test Examples 9 to 14 was pressure-bonded to the pellets of a solid electrolyte according to Test Example 8 to fabricate samples. Each sample was placed in an individual tube, and under the condition of 100°C, a mixed gas (80 volume% of hydrogen, 4 volume% of oxygen, and 16 volume% of nitrogen) was fed at a flow rate of 30 ml per minute (in terms of standard state) from one port of the tube, and was discharged from the other port. Then, the discharged gas was analyzed by a gas chromatograph, the concentration z (%) of oxygen at the discharge port was measured, and the oxygen consumption rate y (%) was determined by the following formula (2).

$$y = ((4 - z)/4) \times 100 \qquad (2)$$

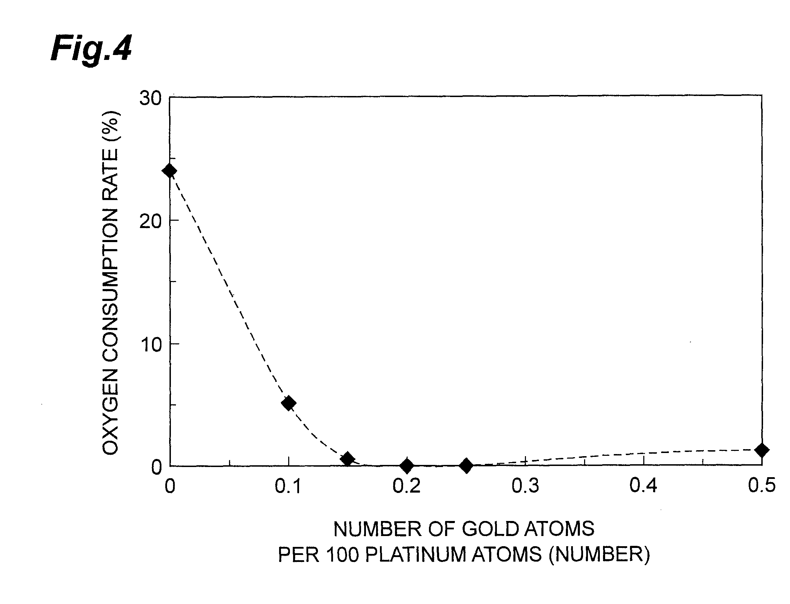

The results of y determined as above are shown in Fig. 4. Fig. 4 is a graph showing relationship, in an anode of each sample, of an oxygen consumption rate (%) obtained by the sample relative to the number of gold atoms per 100 platinum atoms. From Fig. 4, it was understood that y was 24% when the number of gold atoms is 0, whereas y was 4% when 0.10, y was 0.5% when 0.15, y was 0% when 0.20, y was 0% when 0.25, y was 1.5% when 0.50. In particular, it was understood that, in the case of using the electrode in Test Example 12 (the number of gold atoms was approximately 0.2) or Test Example 13 (the number of gold atoms was approximately 0.25) as an anode, the reactivity with oxygen was extremely low and the electrode was particularly suitable for an anode of fuel cells.

[Test Example 17]

<Electromotive Force of Membrane-Electrode Assembly>

In the same manner as Test Example 15 other than using the electrode of Test Example 9 (i.e., an electrode made of Pt) as the cathode, a membrane-electrode assembly was fabricated and the ΔE (mV) was measured. The obtained results are shown in Fig. 3 together with the results of Test Example 15.

Here, if the cathode of Test Example 1 is used as a cathode and the anode of Test Example 9 is used as an anode in a mixed gas having a hydrogen concentration of 80 volume% or more, the electromotive force (J) of a membrane-electrode assembly having such a configuration becomes equivalent to a difference between the ΔE determined by the present Test Example and the ΔE determined by Test Example 15 through the use of the cathode of Test Example 1. Then, from the results described above, it was found that the electromotive force (J) of such a membrane-electrode assembly was exceeding 1 V

[Test Example 18]

<Single-Chamber Solid Electrolyte Fuel Cell>

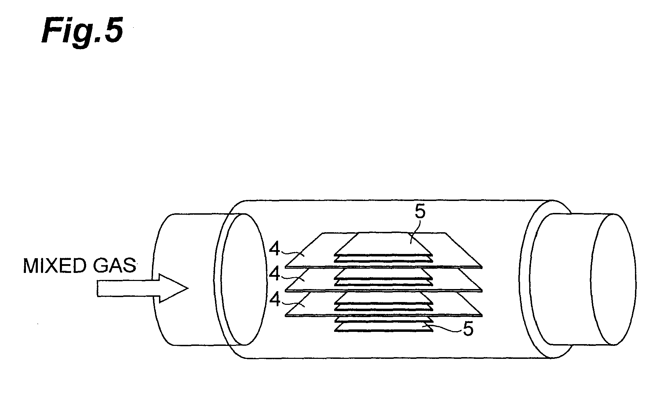

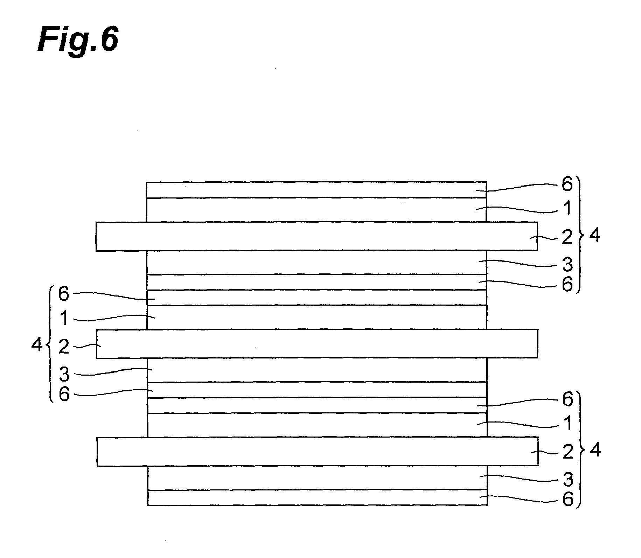

By using the carbon paper having a cathode of Test Example 1, the solid electrolyte of Test Example 8, and the carbon paper having an anode of Test Example 12, a membrane-electrode assembly 4 (refer to Figs. 5 and 6) was fabricated. In this procedure, the cathode side of the carbon paper with a cathode was pressure-bonded so as to make contact with one side of the solid electrolyte and the anode side of the carbon paper having an anode was pressure-bonded so as to make contact with the other side of the solid electrolyte. A single layer of this membrane-electrode assembly was prepared, or two, three, and four layers (stacks) of the assembly were prepared, respectively, by stacking and pressure-bonding, and each of them was placed in an individual tube to obtain single-chamber solid electrolyte fuel cells.

Under the condition of 50°C, a mixed gas (80% of hydrogen, 4% of oxygen, and 16% of nitrogen) was fed to each fuel cell from one port at a flow rate of 5 ml per minute (in terms of standard state), and was discharged from the other port. As an example, Fig. 5 schematically shows the configuration of a fuel cell in the case of stacking three layers of the membrane-electrode assembly 4. Fig. 6 shows the laminated state of the membrane-electrode assembly 4 in Fig. 5.

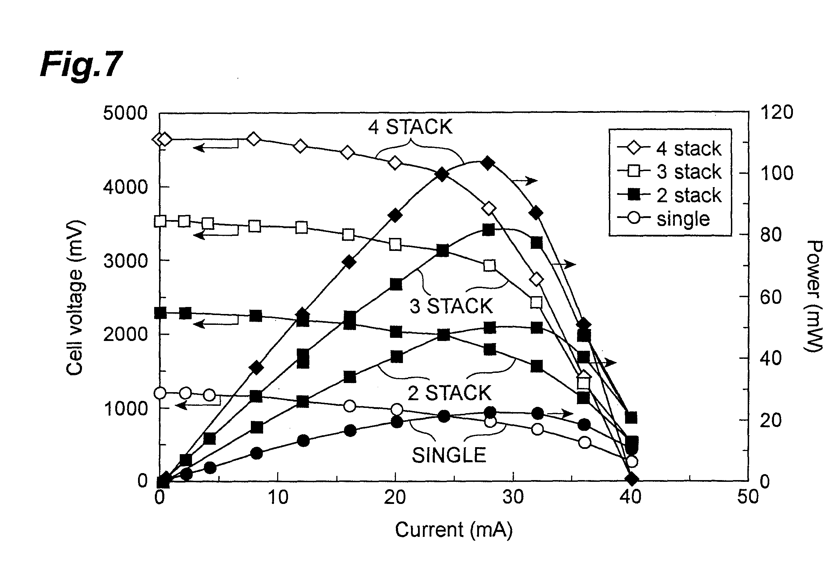

Fig. 7 shows the results obtained by operating each single-chamber solid electrolyte fuel cell under the conditions described above. Fig. 7 is a graph showing power generation characteristics (current-voltage characteristics) obtained in each case of laminating one to four layers of the membrane-electrode assembly 4. It should be noted that, in Fig. 7, the arched curves each having a maximum value attribute to Power on the right vertical axis and the right-downward-sloping characteristics attribute to Cell Voltage on the left vertical axis.

From Fig. 7, it was found that an output exceeding 100 mV can be obtained by stacking four layers. In addition, from the results of Test Example 16, it was confirmed that the same effects as the above can be obtained, even when using the anodes of Test Examples 10, 11, 13, and 14 instead of the anode of Test Example 12.

**Claims**

1. An electrode, comprising ΔEh, represented by the following formula (1), being not less than -10 mV and not more than 100 mV,

$$\Delta Eh = E_0 - E_3 \quad (1)$$

(where $E_0$ denotes an electrode potential when a gas having a hydrogen concentration of 0% (an oxidizing gas only) makes contact with the electrode at room temperature, and $E_3$ denotes an electrode potential when a mixed gas having a hydrogen concentration of 3 volume% (a hydrogen gas and the oxidizing gas) makes contact with the electrode at room temperature.

2. An electrode catalyst composition, comprising a trivalent manganese-containing compound.

3. The electrode catalyst composition according to claim 2, wherein the trivalent manganese-containing compound is supported by a conductive material.

4. The electrode catalyst composition according to claim 2 or 3, wherein the trivalent manganese-containing compound is $Mn_2O_3$.

5. The electrode catalyst composition according to any one of claims 2 to 4, wherein the conductive material is a carbon material.

6. An electrode, comprising the electrode catalyst composition according to any one of claims 2 to 5.

7. A fuel cell, comprising the electrode according to claim 1 or 6.

8. A solid electrolyte fuel cell, comprising the electrode according to claim 1 or 6.

9. A single-chamber solid electrolyte fuel cell, comprising the electrode according to claim 1 or 6.

10. A single-chamber solid electrolyte fuel cell, comprising a cathode and an anode, both made of the electrode according to claim 1 or 6.

11. The single-chamber solid electrolyte fuel cell according to claim 10, whrein the anode is an electrode including gold and platinum.

12. The single-chamber solid electrolyte fuel cell according to claim 11, whrein, in the electrode including gold and platinum, the number of gold atoms is exceeding 0 and not more than 3, when the number of platinum atoms is 100.

13. The single-chamber solid electrolyte fuel cell according to claim 11 or 12, wherein, in the electrode including gold and platinum, the platinum is modified with the gold.

14. A membrane-electrode assembly, comprising: a solid electrolyte membrane; and the electrode according to claim 1 or 6 being attached to the solid electrolyte membrane.

# Fig.1

FUEL GAS

OXIDIZING GAS

*Fig.2*

MIXED GAS
(FUEL GAS +
OXIDIZING GAS)

4
1 2 3

Fig.3

HYDROGEN CONCENTRATION (VOLUME%)

$\Delta E$ (mV)

Legend:
- WO$_3$
- NiO
- ZrO$_2$
- SnO$_2$
- In$_2$O$_3$
- MnO$_2$
- Mn$_2$O$_3$
- Pt

EP 2 133 945 A1

EP 2 133 945 A1

**Fig.4**

*Fig.5*

MIXED GAS

# Fig.6

Fig.7

**INTERNATIONAL SEARCH REPORT**

| | International application No. |
|---|---|
| | PCT/JP2008/055906 |

A. CLASSIFICATION OF SUBJECT MATTER
*H01M4/90*(2006.01)i, *B01J23/32*(2006.01)i, *H01M8/10*(2006.01)i, *H01M8/12*(2006.01)i

According to International Patent Classification (IPC) or to both national classification and IPC

B. FIELDS SEARCHED

Minimum documentation searched (classification system followed by classification symbols)
H01M4/90, B01J23/32, H01M8/10, H01M8/12

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-35298 A (Matsushita Electric Industrial Co., Ltd.), 08 February, 2007 (08.02.07), Claims; Par. Nos. [0003], [0055] (Family: none) | 1-14 |
| A | WO 2007/023964 A1 (Matsushita Electric Industrial Co., Ltd.), 01 March, 2007 (01.03.07), Claims; Par. Nos. [0072], [0073] & JP 3996629 B        & US 2007/0243449 A | 1-14 |
| A | JP 2006-302822 A (Nippon Shokubai Co., Ltd.), 02 November, 2006 (02.11.06), Claims; Par. Nos. [0009], [0010] (Family: none) | 1-14 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 24 June, 2008 (24.06.08) | 08 July, 2008 (08.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/055906

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-150085 A  (Samsung SDI Co., Ltd.),<br>09 June, 2005 (09.06.05),<br>Claims<br>& US 2005/0112451 A1    & KR 10-2005-0046102 A<br>& CN 1617372 A | 1-14 |
| A | WO 2006/021740 A1  (JOHNSON MATTHY PUBLIC LTD.<br>CO.),<br>02 March, 2006 (02.03.06),<br>Claims; examples 1, 2; Figs. 1, 2<br>& GB 419062 D          & EP 1807200 A<br>& CA 2575806 A          & KR 10-2007-0046112 A<br>& JP 2008-510609 A | 1-14 |
| A | JP 9-161811 A  (Tanaka Kikinzoku Kogyo Kabushiki<br>Kaisha),<br>20 June, 1997 (20.06.97),<br>Claims<br>(Family: none) | 1-14 |
| A | JP 2006-45614 A  (Dowa Mining Co., Ltd.),<br>16 February, 2006 (16.02.06),<br>Claims; Par. Nos. [0003], [0018], [0019]<br>& US 2006/0027042 A1    & EP 1623780 A1<br>& KR 10-2006-0048970 A   & CN 1733396 A | 1-14 |
| A | JP 9-17435 A  (Degussa AG.),<br>17 January, 1997 (17.01.97),<br>Claims; Par. Nos. [0030] to [0036]<br>& US 5767036 A          & EP 743092 A1<br>& DE 19517598 C         & DE 59602928 C<br>& AT 183946 E          & AT 183946 T<br>& DK 743092 T | 1-14 |

Form PCT/ISA/210 (continuation of second sheet) (April 2007)

## REFERENCES CITED IN THE DESCRIPTION

**Patent documents cited in the description**

- JP 10294117 A

- JP 2002280015 A

**Non-patent literature cited in the description**

- **Priestnall ; Kozdeba ; Fish ; Nilson.** *Journal of Power Source,* 2002, vol. 106, 21-30
- **Dyer.** *Nature,* 1990, vol. 343, 547-548

- *Electrochemical and Solid State Letters,* 2006, vol. 9, A105-A109